# EUROPEAN PATENT SPECIFICATION

(11) **EP 1 363 051 B1**
(45) Date of publication and mention of the grant of the patent: **13.06.2012**
(21) Application number: 03252455.5
(22) Date of filing: 17.04.2003
(51) Int. Cl.: F16J 15/32, F01D 11/00

(54) **Brush seal and method of installing a brush seal in an apparatus.**
Bürstendichtung und Verfahren zum einbauen einer Bürstendichtung in eine Vorrichtung.
Joint à brosse et méthode d'installation d'un joint à brosse dans un appareil.

(30) Priority: 25.04.2002 US 63463
(43) Date of publication of application: 19.11.2003
(73) Proprietor: United Technologies Corporation, Hartford, CT 06101 (US)
(72) Inventor: Addis, Mark E., Kennebunk, Maine 04043 (US)
(74) Representative: Leckey, David Herbert

(56) References cited:
- EP-A- 0 992 721
- US-A- 5 090 710

## Description

### Background of Invention

This invention relates to a brush seals. Specifically, this invention relates to a brush seal for an apparatus that utilizes features of the apparatus as functioning elements of the brush seal. This enables the brush seal to have fewer parts.

Brush seals prevent the escape of fluid (i.e. air) through a gap between two parts of an apparatus. One such apparatus that uses brush seals is a gas turbine engine. The placement of the brush seal in the engine typically prevents secondary flow from escaping through a gap between a stationary part (e.g. a diffuser case) and a rotating part (e.g. a turbine shaft). The brush seal can have other uses, such as sealing a gap between stationary parts of the engine.

The brush seal mounts to a support and a removable retainer on the engine. Specifically, the brush seal mounts against the support and the removable retainer confines the brush seal against the support. The support typically engages a side plate of a conventional brush seal and the retainer typically engages a back plate of a conventional brush seal.

Of the numerous parts involved in this arrangement of a conventional brush seal, some of the parts have redundancy with other parts. This redundancy could impact the weight, cost and complexity of the brush seal arrangement.

### Summary of Invention

It is an object of the present invention in a preferred embodiment at least to provide a brush seal with a reduced part count.

It is a further object of the present invention in a preferred embodiment at least to reduce inventory costs.

It is a further object of the present invention in a preferred embodiment at least to provide a lighter weight brush seal.

It is a further object of the present invention in a preferred embodiment at least to provide a reduced cost brush seal.

It is a further object of the present invention in a preferred embodiment at least to manufacture a brush seal assembly in fewer steps.

It is a further object of the present invention in a preferred embodiment at least to assemble a brush seal with simpler fixturing.

It is a further object of the present invention in a preferred embodiment at least to provide a brush seal assembly method that allows easier inspection.

It is a further object of the present invention in a preferred embodiment at least to provide a brush seal assembly with reusable parts.

It is a further object of the present invention in a preferred embodiment at least to reduce the cost of replacing a brush on an apparatus.

EP-A-0992721 and US 5 090 710 discloses a brush seal having side plates and back plates.

From a first aspect, the present invention provides apparatus as claimed in claim 1.

From a second aspect, the present invention provides a method of installing a brush seal, as claimed in claim 8.

### Brief Description of Drawings

Other uses and advantages of the present invention will become apparent to those skilled in the art upon reference to the specification and the drawings, in which:
Figure 1 is a partial cross-sectional view of a conventional multiple stage brush seal installed in an apparatus;
Figure 2 is a partial cross-sectional view of one embodiment of a brush seal of the present invention installed in an apparatus;
Figure 3 is a cross-sectional view of the brush seal of Figure 2 before installation in an apparatus;
Figure 4 is a partial elevational view of one component of the brush seal of Figure 3;
Figure 5 is a cross-sectional view of the component of Figure 4 taken along line V-V; and
Figure 6 is a partial cross-sectional view of another embodiment of a brush seal of the present invention installed in an apparatus.

### Detailed Description

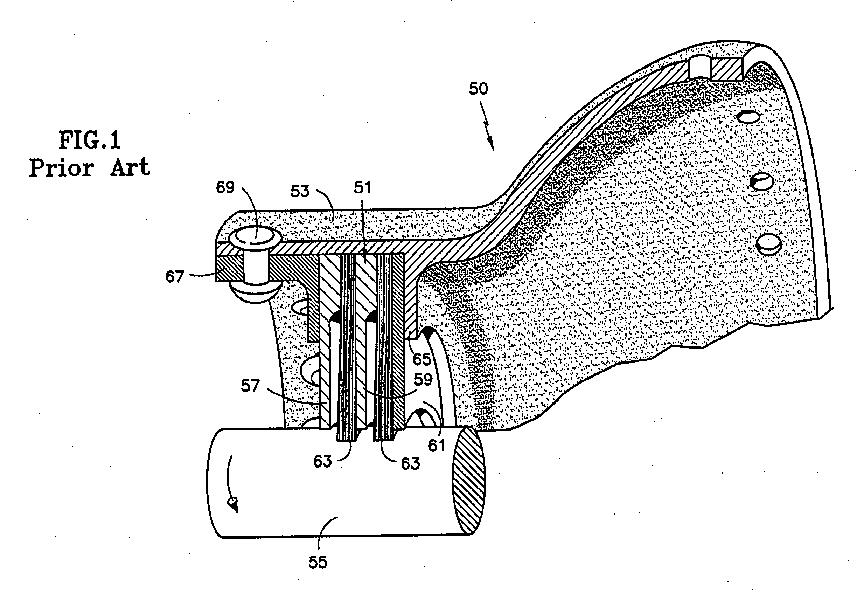

Figure 1 provides a partial cross-sectional view of a conventional apparatus 50 having a brush seal 51. The apparatus 50 is preferably a gas turbine engine, but could be any other suitable machine. The brush seal 51 prevents secondary fluid flow from escaping through a gap between a first, typically stationary, part 53 (e.g. a diffuser case of a gas turbine engine) and a second, typically rotating, part 55 (e.g. a turbine shaft of a gas turbine engine).

The brush seal 51 includes a side plate 57 (with an integral windage cover), a middle plate 59 and a back plate 61. Bristle packs 63 reside between the plates 57, 59, 61. The plates 57, 59, 61 are made from suitable alloys, such as Inconel^{®} or 400-series stainless steel. The bristles are also made from a suitable alloy such as a cobalt alloy. The plates 57, 59, 61 and the bristle packs 63 are welded together to form an assembly before placement in the engine 50.

The brush seal 51 removably mounts to the engine 50. The engine 50 includes a support 65, such as an annular flange, and a removable retainer 67 for mounting the brush seal 51. As a first assembly step, the technician places the brush seal 51 against the support 65 in the engine 50.

The technician then places the removable retainer 67 against the brush seal 51. Finally, the technician secures the retainer 67 to the engine 50 using suitable fasteners 69 such as rivets. The support 65 and the retainer 67 sandwich the brush seal 51 in proper position within the engine 50.

During operation, the bristle packs 63 extend from the diffuser case 53 and engage the turbine shaft 55. In other words, the bristle packs 63 seal a gap between the diffuser case 53 and the turbine shaft 55 to prevent the escape of secondary fluid flow.

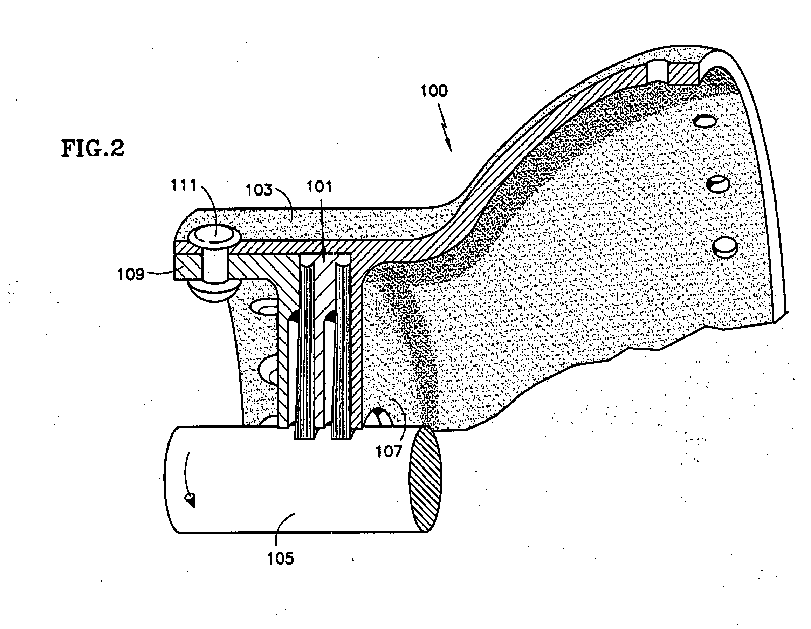

Figure 2 provides a partial cross-sectional view of an apparatus 100 having a brush seal 101 of the present invention. As with apparatus 50, the apparatus 100 could be a gas turbine engine or other suitable machine. The brush seal 101 likewise prevents secondary fluid flow from escaping through a gap between a first part 103 (e.g. a diffuser case of a gas turbine engine) and a second part 105 (e.g. a turbine shaft of a gas turbine engine).

The brush seal 101 removably mounts to the engine 100 using a support 107, such as an annular flange, and a removable retainer 109. As with the conventional brush seal 51, the retainer 109 secures to the engine 100 using suitable fasteners 111 such as rivets, snap rings (not shown), threaded fasteners (not shown) and retaining rings (not shown). Alternatively, the retainer 109 could be welded or brazed to the engine 100. When fastened to the engine 100, the retainer 109 sandwiches the brush seal 101 against the support 107 for proper positioning of the brush seal 101 within the engine 100.

Differently than the conventional brush seal 51, the support 107 and the retainer 109 act as the side plate and the back plate of the brush seal 101 of the present invention. The use of the support 107 and the retainer 109 as the side plate and the back plate has clear benefits. For example, the brush seal 101 has fewer parts than the conventional brush seal 51. With fewer parts, the brush seal 101 should reduce the weight of the engine 100, lower inventory costs, and have a lower manufacturing cost. Lacking the side plate and the back plate, the present invention can assemble the brush seal 101 in fewer steps than with the conventional brush seal 51. For example, the conventional brush seal 51 requires the side plate and back plate to undergo a facing operation during assembly. The brush seal of the present invention does not.

Although Figure 2 shows an engine configuration with the support 107 and the retainer 109 acting as the back plate and side plate, respectively, the engine could have a different configuration (not shown) with the support 107 and the retainer 109 acting as the side plate and back plate, respectively.

To act as the side plate and back plate of the brush, the support 107 and the retainer 109 should have a different shape than the support 65 and retainer 67 of the conventional arrangement. Specifically, the support 107 and the retainer 109 should be radially lengthened and should approximate the shape of the side plate 57 (with the integral windage cover) and back plate 61 at locations adjacent the brush seal 101. In an Original Equipment Manufacturer (OEM) situation, the support 107 and the retainer 109 could be manufactured to the new shape. In a post-OEM (e.g. repair) situation, the support 107 and the retainer 109 could have extra material added thereto such as by welding.

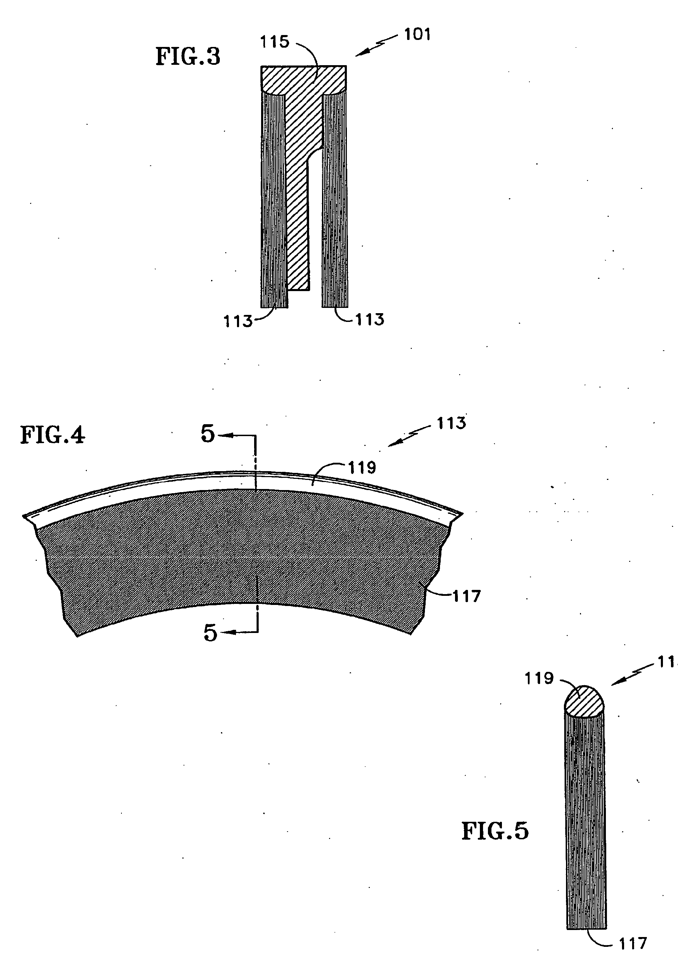

Likewise, the brush seal 101 is different from the conventional brush seal 51. Figure 3 displays brush seal 101 before installation in the engine 100. The brush seal includes bristle arrangements 113 separated by a mid plate 115. Notably, the brush seal 101 lacks a side plate and a back plate. As discussed above, the support 107 and the retainer 109 of the engine 100 act as the side plate and back plate when the brush seal is installed in the engine 100.

Figures 4 and 5 show the bristle arrangement 113 for the brush seal of the present invention. Although the figure only shows an arcuate segment, the bristle arrangement 113 is preferably annular. In an annular configuration, the bristle arrangement 113 can be referred to as a bristle ring.

The bristle ring 113 includes a plurality of bristles 117 made from a suitable alloy such as a cobalt alloy. An annular joint 119 secures the bristles together. Preferably, the joint 119 is a weld joint. European Patent Application number 03250864.0 describes in further detail the steps involved in making the bristle ring 113. As seen in Figure 4, the bristles 117 are not aligned with a radial line of the bristle ring 113. Rather, the bristles 117 form a lay angle (in the direction of rotation of the turbine shaft 105) with the radial line of the bristle ring 113.

The mid plate 115 for the brush seal 101 of the present invention can be identical to the mid plate 51 for the conventional brush seal 51. As with the plates of the conventional brush seal 51, the mid plate 115 can be made from a suitable alloy, such as Inconel^{®} or 400-series stainless steel.

The technician assembles the brush seal 101 by first placing one bristle ring 113 within a fixture (not shown). The technician then places the mid plate 115 into the fixture, followed by the second bristle ring 113. The technician then secures another fixture (not shown) to the first fixture for holding the bristle rings 113 and mid plate 115 together temporarily. The fixturing used assemble the bristle ring 113 is simpler than the fixturing used to assemble the conventional brush seal 51. The conventional brush seal fixturing is more complex since the fixturing must accommodate the side plate and the back plate. The fixturing for the present invention does not require these complexities since the brush seal 101 has neither a side plate nor a back plate.

The technician secures the bristle rings 113 and mid plate 115 together using a suitable technique such as by welding. The technician can then disconnect the fixturing to reveal the fully assembled brush seal 101 of the present invention. Lacking the side plate and the back plate, inspection of the brush seal 101 of the present invention is easier than with conventional brush seals 51. Inspecting the conventional brush seal 51 is more difficult because the side plates and back plate can obscure portions of the weld joint.

Since the brush seal 101 lacks a side plate and a back plate, the present invention modifies the support 107 and the retainer 109 to act as the side plate and the back plate. Specifically, the support 107 is radially lengthened. As with the back plate 61 of the conventional brush seal 51, the lengthened support 107 engages a substantial length of the bristles 117 to limit bristle blowover in the flow direction. The support 107 could be lengthened by, for example, welding additional material thereto.

Since the retainer 109 is removable, the present invention can either can either radially lengthen the retainer 109 similar to the support 109, or the present invention can use a replacement retainer 109 that made to-length. As with the side plate 57 of the conventional brush seal, the proximal (i.e. radially outer) end of the retainer 109 abuts the bristles 113. The distal (i.e. radially inner) end of the retainer is laterally spaced from the bristles 113 to act as the windage cover.

Replacement of the brush seal 101 of the present invention should be less expensive than the replacement of the conventional brush seal 51. When replacing the conventional brush seal 51, the technician removes the rivets 69 to release the retainer 67, removes the brush seal 51 (including the side plate, back plate and bristle packs), provides a replacement brush seal (with side plate, back plate and bristle packs) and resecures the retainer 67. When replacing the brush seal 101 of the present invention, the technician only needs to remove the rivets 111 to release the retainer 109, remove the bristle ring 113, replace the bristle ring 113 and reattach the retainer 109. In essence (since the side plate and back plate are engine part not part of the brush seal 101), the present invention reuses the side plate and the back plate of the brush seal.

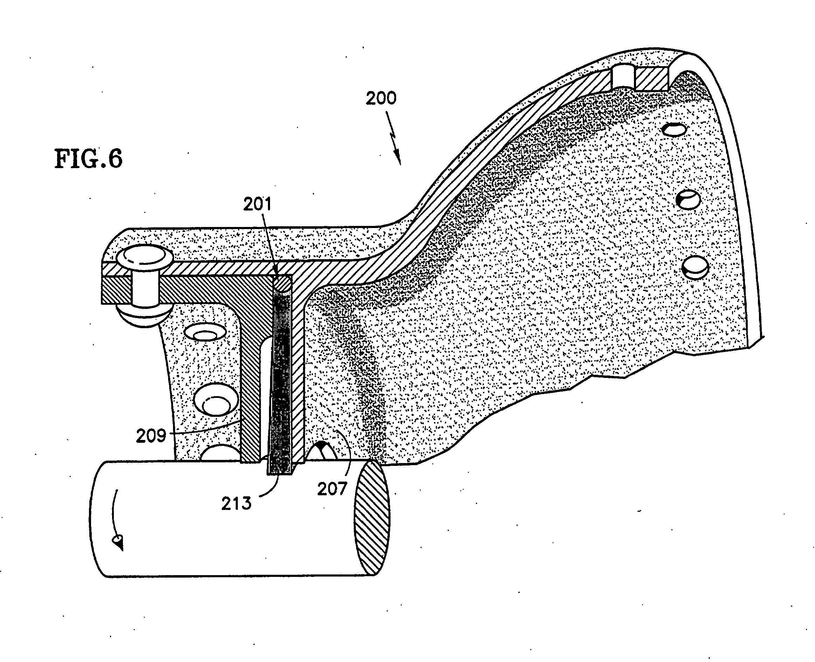

Although Figure 2 displays a multiple stage brush seal 101, the present invention could also be used on a single stage brush seal. Figure 6 displays an engine 200 with such a single stage brush seal 201. In the single stage version, the brush seal 201 comprises just a bristle ring 213. As with the multiple stage version, a support 207 and a retainer 209 of the engine 200 act as the side plate and the back plate of the brush seal 201.

The present invention has been described in connection with the preferred embodiments of the various figures. It is to be understood that other similar embodiments may be used or modifications and additions may be made to the described embodiment for performing the same function of the present invention without deviating therefrom. Therefore, the present invention should not be limited to any single embodiment, but rather construed in breadth and scope in accordance with the recitation of the appended claims.

## Claims

1. An apparatus (100,200) having
a first part (103),
a support (107,207),
a brush seal (101,201)
a retainer (109,209)
wherein the retainer (109, 209) is secured to the first part (103);
the first part (103) and the support (107,207) are integrally formed in one piece;
the retainer (109,209) sandwiches the brush seal (101,201) against the support (107,207),
and **characterised in that**: said support (107,207) and said retainer (109,209) act as a side plate and a back plate for the brush seal (101,201).

2. The apparatus of claim 1, wherein said brush seal comprises a bristle arrangement.

3. The apparatus of claim 2 wherein said bristle arrangement comprises a bristle ring (113).

4. The apparatus of claim 3, wherein said bristle ring (113) comprises a plurality of bristles (117) secured together by a joint (119).

5. The apparatus of claim 4, wherein said joint (119) comprises a weld joint.

6. The apparatus of claim 2, 3 or 4, wherein said bristle arrangement comprises a plurality of bristle arrangements and further comprising a mid plate (115) located between adjacent bristle arrangements to form a multiple stage brush seal.

7. The apparatus of any preceding claim, wherein said apparatus is a gas turbine engine.

8. A method of installing a brush seal (101; 201) in an apparatus according to claim 1 (100; 200), comprising the steps of:
providing a first part (103) with an integral support (107; 207);
locating a brush seal (101; 201) against said support (107; 207); and
securing said brush seal against said support by retaining means (109, 209) secured to said first part (103);
wherein said support (107; 207) and said retaining means (109; 209) act as a back plate and a side plate for said brush seal (101; 201).

9. The method of claim 8, wherein said brush seal (101; 201) comprises a bristle arrangement.

10. The method of claim 9, wherein said brush seal (101; 201) providing step comprises providing a plurality of bristle arrangements (113) and a mid plate (115) between adjacent bristle arrangements.

11. The method of claim 10, further comprising a step of securing said bristle arrangements (113) to said mid plates (115), wherein said bristle arrangements are secured to said mid plates before said brush seal is secured between said support (107; 207) and said retaining means (109; 209).

12. The method of any of claims 8 to 11, further comprising a step of lengthening said support (107; 207) before said brush seal (101; 201) securing step.

13. The method of any of claims 8 to 12, further comprising either a step of lengthening said retaining means (109; 209) before said brush seal (101; 201) securing step or a step of replacing said retaining means (109; 209) with a lengthened retaining means before said brush seal (101; 201) securing step.

14. The method of any of claims 8 to 13, wherein said apparatus comprises a gas turbine engine.

## Patentansprüche

1. Vorrichtung (100, 200) aufweisend:
einen ersten Bereich (103),
einen Halter (107, 207),
eine Bürstendichtung (101, 201)
einen Befestiger (109, 209)
wobei der Befestiger (109, 209) an dem ersten Bereich (103) befestigt ist;
wobei der erste Bereich (103) und der Halter (107, 207) integral in einem Stück ausgebildet sind;
wobei der Befestiger (109, 209) die Bürstendichtung (101, 201) gegen den Halter (107, 207) einschließt.
und **dadurch gekennzeichnet, dass** der Halter (107, 207) und der Befestiger (109, 209) als eine Seitenplatte und eine Rückplatte für die Bürstendichtung (101, 201) agieren.

2. Vorrichtung nach Anspruch 1, wobei die Bürstendichtung eine Borstenanordnung umfasst.

3. Vorrichtung nach Anspruch 2, wobei die Borstenanordnung einen Borstenring (113) umfasst.

4. Vorrichtung nach Anspruch 3, wobei der Borstenring (113) eine Mehrzahl von Borsten (117) umfasst, die über eine Verbindung (119) miteinander befestigt sind.

5. Vorrichtung nach Anspruch 4, wobei die Verbindung (119) eine Schweißverbindung umfasst.

6. Vorrichtung nach Anspruch 2, 3 oder 4, wobei die Borstenanordnung eine Mehrzahl von Borstenanordnungen umfasst, und des Weiteren umfassend eine Mittelplatte (115), die zwischen benachbarten Borstenanordnungen angeordnet ist, um eine mehrstufige Bürstendichtung auszubilden.

7. Vorrichtung nach einem der vorangehenden Ansprüche, wobei die Vorrichtung eine Gasturbinenmaschine ist.

8. Verfahren zum Installieren einer Bürstendichtung (101; 201) in einer Vorrichtung (100; 200) nach Anspruch 1, umfassend die Schritte:
Bereitstellen eines ersten Bereichs (103) mit einem integralen Halter (107; 207);
Anordnen einer Bürstendichtung (101: 201) gegen den Halter (107; 207); und
Befestigen der Bürstendichtung gegen den Halter über ein Befestigungsmittel (109, 209), das an dem ersten Bereich (103) befestigt ist;
wobei der Halter (107; 207) und das Befestigungsmittel (109; 209) als eine Rückplatte und eine Seitenplatte für die Bürstendichtung (101; 201) agieren.

9. Verfahren nach Anspruch 8, wobei die Bürstendichtung (101; 201) eine Borstenanordnung umfasst.

10. Verfahren nach Anspruch 9, wobei der Schritt des Bereitstellens der Bürstendichtung (101; 201) Bereitstellen eimer Mehrzahl von Borstenanordnungen (113) und einer Mittelplatte (115) zwischen benachbarten Borstenanordnungen umfasst.

11. Verfahren nach Anspruch 10, des Weiteren umfassend einen Schritt des Befestigens der Borstenanordnungen (113) an den Mittelplatten (115), wobei die Borstenanordnungen an den Mittelplatten befestigt sind bevor die Bürstendichtung zwischen dem Halter (107; 207) und dem Befestigungsmittel (109; 209) befestigt ist.

12. Verfahren nach einem der Anspruche 8 bis 11, des Weiteren umfassend einen Schritt des Längens des Halters (107; 207) vor dem Schritt des Befestigens der Bürstendichtung (101; 201).

13. Verfahren nach einem der Ansprüche 8 bis 12, des Weiteren umfassend entweder einen Schritt des Langes des Befestigungsmittels (109; 209) vor dem Schritt des Befestigens der Bürstendichtung (101; 201) oder ein Schritt des Austauschens des Befestigungsmittels (109; 209) mit einem gelängten Befestigungsmittel vor dem Schritt des Befestigens der Bürstendichtung (101; 201).

14. Verfahren nach einem der Ansprüche 8 bis 13, wobei die Vorrichtung eine Gasturbinenmaschine umfasst.

## Revendications

1. Équipement (100, 200) comportant
une première partie (103),
un support (107, 207),
un joint à brosse (101, 201),
une pièce de retenue (109, 209),
dans lequel la pièce de retenue (109, 209) est solidement fixée à la première partie (103) ;
la première partie (103) et le support (107, 207) sont monobloc, constituant une seule pièce ;
la pièce de retenue (109, 209) coince le joint à brosse (101, 201) contre le support (107, 207),
ledit équipement étant **caractérisé en ce que** ledit support (107, 207) et ladite pièce de retenue (109, 209) jouent le rôle de flasque et de plaque arrière pour le joint à brosse (101, 201).

2. Équipement selon la revendication 1, dans lequel ledit joint à brosse comprend un agencement de poils.

3. Équipement selon la revendication 2, dans lequel ledit agencement de poils comprend une bague de poils (113).

4. Équipement selon la revendication 3, dans lequel ladite bague de crins (113) comprend une pluralité de poils (117) fixés ensemble par un joint (119).

5. Équipement selon la revendication 4, dans lequel ledit joint (119) comprend un joint soudé.

6. Équipement selon la revendication 2, 3 ou 4, dans lequel ledit agencement de poils consiste en une pluralité d'agencements de poils et comprend en outre une plaque intermédiaire (115) située entre des agencements de poils adjacents pour constituer un joint à brosse à étages multiples.

7. Équipement selon l'une quelconque des revendications précédentes, dans lequel ledit équipement est une turbine à gaz.

8. Procédé d'installation d'un joint à brosse (101, 201) dans un équipement (100, 200) selon la revendication 1, comprenant les étapes consistant à :
fournir une première partie (103) monobloc avec un support (107, 207) ;
placer un joint à brosse (101, 201) contre ledit support (107, 207) ;
fixer solidement ledit joint à brosse contre ledit support par un moyen de retenue (109, 209) solidement fixée à la première partie (103),
dans lequel ledit support (107, 207) et lesdit moyens de retenue (109, 209) jouent le rôle de plaque arrière et de flasque pour ledit joint à brosse (101, 201).

9. Procédé selon la revendication 8, dans lequel ledit joint à brosse (101, 201) comprend un agencement de poils.

10. Procédé selon la revendication 9, dans lequel l'étape de fourniture dudit joint à brosse (101, 201) inclut la fourniture d'une pluralité d'agencements (113) de poils et une plaque intermédiaire (115) située entre des agencements de poils adjacents.

11. Procédé selon la revendication 10, comprenant en outre une étape consistant à solidement fixer lesdits agencements (113) de poils et auxdites plaques intermédiaires (115), dans laquelle lesdits agencements de poils sont fixés auxdites plaques intermédiaires avant que ledit joint à brosse soit solidement fixé entre ledit support (107, 207) et ledit moyens de retenue (109, 209).

12. Procédé selon l'une quelconque des revendications 8 à 11, comprenant en outre une étape consistant à allonger ledit support (107, 207) avant l'étape de fixation dudit joint à brosse (101, 201).

13. Procédé selon l'une quelconque des revendications 8 à 12, comprenant en outre soit une étape consistant à allonger lesdit moyens de retenue (109, 209) avant l'étape de fixation dudit joint à brosse (101, 201) soit une étape consistant à remplacer lesdit moyens de retenue (109, 209) par un moyen de retenue allongé avant l'étape de fixation dudit joint à brosse (101, 201).

14. Procédé selon l'une quelconque des revendications 8 à 13, dans lequel ledit équipement comprend une turbine à gaz.
